# EUROPEAN PATENT APPLICATION

(11) **EP 1 712 772 A2**
(43) Date of publication of application: **18.10.2006**
(21) Application number: 06007703.9
(22) Date of filing: 12.04.2006
(51) Int. Cl.: F02M 35/10, B60K 6/02

(54) **Hybrid vehicle and engine therefor**

(30) Priority: 18.04.2005 JP 2005120166; 14.04.2005 JP 2005117269
(71) Applicant: YAMAHA HATSUDOKI KABUSHIKI KAISHA, Iwata-shi, Shizuoka-ken 438-8501 (JP)
(72) Inventor: Norimatsu, Nobuo, Iwata-shi Shizuoka-ken 438-8501 (JP); Kaneda, Toshiaki, Iwata-shi Shizuoka-ken 438-8501 (JP); Suzuki, Makoto, Iwata-shi Shizuoka-ken 438-8501 (JP); Masuda, Tatsuyuki, Iwata-shi Shizuoka-ken 438-8501 (JP); Takeshi, Watanabe, Iwata-shi Shizuoka-ken 438-8501 (JP); Hosoi, Yukiharu, Iwata-shi Shizuoka-ken 438-8501 (JP)
(74) Representative: Grünecker, Kinkeldey, Stockmair & Schwanhäusser Anwaltssozietät

(57) **Abstract**

The present invention relates to an engine, in particular for a hybrid vehicle, comprising a fuel-air mixture delivery system delivering fuel-air mixture to a cylinder of the engine and a main intake pipe connecting the fuel-air mixture delivery system to an intake port inlet portion of the cylinder, wherein a length along a centerline of the main intake pipe measured from an intake port end of the main intake pipe to the intake port inlet portion is in the range of 3 to 15 times larger than an inside diameter of the main intake pipe.

## Description

The present invention relates to an engine, in particular for a hybrid vehicle and to a hybrid vehicle having an engine, a motor, a generator rotated by the engine, and a wheel driven at least either by the engine or by the motor.

To date, a hybrid-driven type (so-called parallel-hybrid-driven type) vehicle (straddle type vehicle) has been proposed, which uses an engine (internal combustion engine) and an electric motor (motor) as the power source for driving wheels.

In addition, another hybrid-driven type (so-called series-hybrid-driven type) vehicle (straddle type vehicle) has been proposed, which uses an electric motor as a power source for driving a wheel, a generator (electric motor) for charging the battery connected to the electric motor, and an engine for making the generator rotate.

Such hybrid-driven type vehicle (hereinafter referred to as "hybrid vehicle") has typically employed high speed type engine that mainly uses the engine horsepower for obtaining necessary and sufficient acceleration performance with limited output power, as is the case for a small vehicle relying on an engine as its power source (the engine with the displacement of 50cc, for instance) (JP-A-2000-13913 (Pages 3, FIG. 1)).

However, the engine (internal combustion engine) used in the conventional hybrid vehicle described above had problems as stated below. Namely, such problem includes high noise level and vibration emitted during the operation of hybrid vehicle, which is attributable to the higher speed of the engine. In other words, difficulty lies in the conventional hybrid vehicle to attain low noise level and low vibration, the advantage of the electric bestriding (saddle-riding) vehicle.

Further, it involved a problem of increased fuel consumption because of the higher speed of the engine. Also, it involved a problem of increased frictional loss because the drive train of the hybrid vehicle rotates in high speed corresponding to the higher speed of the engine.

Thus, the present invention has been made in light of the circumstances described above. It is therefore an object of the present invention to provide an engine and a hybrid vehicle that can reduce noise level and vibration during the vehicle operation, and also can reduce the fuel consumption.

This objective is solved in an inventive manner by an engine, in particular for a hybrid vehicle, comprising a fuel-air mixture delivery system delivering fuel-air mixture to a cylinder of the engine and a main intake pipe connecting the fuel-air mixture delivery system to an intake port inlet portion of the cylinder, wherein a length along a centerline of the main intake pipe measured from an intake port end of the main intake pipe to the intake port inlet portion is in the range of 3 to 15 times larger than an inside diameter of the main intake pipe.

Preferably, the main intake pipe has a generally cylindrical shape.

According to a further embodiment, the fuel-air mixture delivery system has a fuel-air mixture passing portion through which the fuel-air mixture or the air flows, and wherein a cross-sectional area of said fuel-air mixture passing portion, cut along a direction generally orthogonal to the passing flow of the fuel-air mixture or air, is designed to be 15 % to 25 % of a cross-sectional area of a cylinder bore.

Further, preferably the engine further comprises an air cleaner and an air-cleaner side intake pipe, said air-cleaner side intake pipe having a generally cylindrical shape and being connected to the air cleaner, wherein a centerline length of the air-cleaner side intake pipe is 4 to 10 times larger than an inside diameter of the air-cleaner side intake pipe.

Therein, one end of the air-cleaner side intake pipe may have a protrusion projecting into an inside space of the air cleaner; wherein a centerline length of said protrusion may be twice or more larger than the inside diameter of the air-cleaner side intake pipe. Further, the air cleaner may have an ambient air intake duct section, wherein a part of said ambient air intake duct section may be disposed in the inner space of the air cleaner. Also, a capacity of the air cleaner may be 30 to 150 times larger than a displacement of the engine.

The above objective is further solved in an inventive manner by a hybrid vehicle, having an engine, a motor, a generator rotated by the engine, and a wheel driven at least either by the engine or by the motor, wherein the engine comprises a cylinder, an intake port communicating with the cylinder, a fuel-air mixture delivery system for delivering fuel-air mixture, that is the fuel mixed with the air introduced from the outside, to the inside of a cylinder via the intake port, and a main intake pipe having generally cylindrical shape and connecting the fuel-air mixture delivery system to the intake port; and a centerline length (L1 ) measured from the intake port end of the main intake pipe to the intake port inlet is 3 to 15 times larger than the inside diameter of the main intake pipe.

Preferably, the fuel-air mixture delivery system has a fuel-air mixture passing portion through which the fuel-air mixture or the air flows, and the cross-sectional area of the fuel-air mixture passing portion, cut along the direction generally orthogonal to the passing flow of the fuel-air mixture or air, is designed to be 15 % to 25 % relative to the cross-sectional area of a cylinder bore.

Further, preferably the hybrid vehicle further comprises an air cleaner and an air-cleaner side intake pipe taking generally cylindrical shape and connected to the air cleaner, wherein a centerline length of the air-cleaner side intake pipe is 4 to 10 times larger than the inside diameter of the air-cleaner side intake pipe.

According to a further preferred embodiment, one end of the air-cleaner side intake pipe has a protrusion projecting into the inside space of the air cleaner; and a centerline length of the protrusion is twice or more larger than the inside diameter of the air-cleaner side intake pipe. Therein, the air cleaner may have an ambient air intake duct section, and a part of the ambient air intake duct section may be disposed in the inner space of the air cleaner.

Further, a capacity of the air cleaner may be 30 to 150 times larger than a displacement of the engine.

In the following, the present invention is explained in greater detail with respect to several embodiments thereof in conjunction with the accompanying drawings, wherein:
- FIG. 1: is a left side view of a motorcycle according to the embodiment,
- FIG. 2: is a left side view of an internal combustion engine, an electric motor, and the like according to the embodiment,
- FIG. 3: is a view on arrow F3 shown in FIG. 2,
- FIG. 4: is a cross-sectional view along the line F4 - F4 in FIG. 1,
- FIG. 5: is a top plan view of an air cleaner, a main intake pipe, and an air-cleaner side intake pipe according to the embodiment,
- FIG. 6: is a schematic perspective view of a fuel-air mixture delivery system (carburetor) according to the embodiment,
- FIG. 7: is an illustration to show the relation between the main intake pipe length and the torque characteristics of an engine according to the embodiment,
- FIG. 8: is an illustration to show the relation between the main intake pipe length and the torque characteristics of an engine according to the embodiment,

- FIG. 9: is an illustration to show the relation between the length of air-cleaner side intake pipe and the torque characteristics of an engine according to the embodiment,
- FIG. 10: is an illustration to show the relation between the capacity of the air cleaner and the torque characteristics of an engine according to the embodiment, and
- FIG. 11: is a schematic perspective view of the air cleaner of an engine according to the embodiment.

### Within the figures, reference numeral

- 10:: is a motorcycle,
- 20:: is a front wheel,
- 40:: is an engine,
- 41:: is an intake port inlet portion,
- 42A:: is a cylinder,
- 42B:: is a piston,
- 42C:: is a connecting rod,
- 43:: is a crankshaft,
- 44:: is an exhaust pipe,
- 45:: is a radiator unit,
- 46, 46V:: is an air cleaner,
- 46a, 46b:: is an ambient air intake duct section,
- 47:: is a muffler,
- 48:: is a carburetor,
- 48a:: is a venturi portion,
- 49A:: is a main intake pipe,
- 49b:: is an air-cleaner side intake pipe,
- 49Bp:: is a protrusion,
- 50:: is a generator cooling fan,
- 60:: is a generator unit,
- 61:: is a battery,

- 70:: is a radiator cooling fan,
- 80:: is an electric motor unit,
- 81:: is a rotating shaft,
- 90:: is a rear wheel,
- 91:: is a rear wheel axle,
- 461:: is a first air cleaner part,
- 462:: is a second air cleaner part, and
- 463:: is a connecting part.

### (Structure of the vehicle according to this embodiment)

Next, an embodiment of a vehicle (a motorcycle) will be described with reference to the drawings. For reference, identical or similar reference numerals or symbols are used to denote identical or similar parts in the description of the following drawings. It should be noted, however, that the drawings show typical configuration, and that they are different from the actual object in regard to the relative proportion between each dimension, etc.

Thus, the specific dimensions or the like shall be established taking account of the following description. Needless to say, some differences exist in relative dimensions and proportions between the drawings.

### (1) General structure of a motorcycle

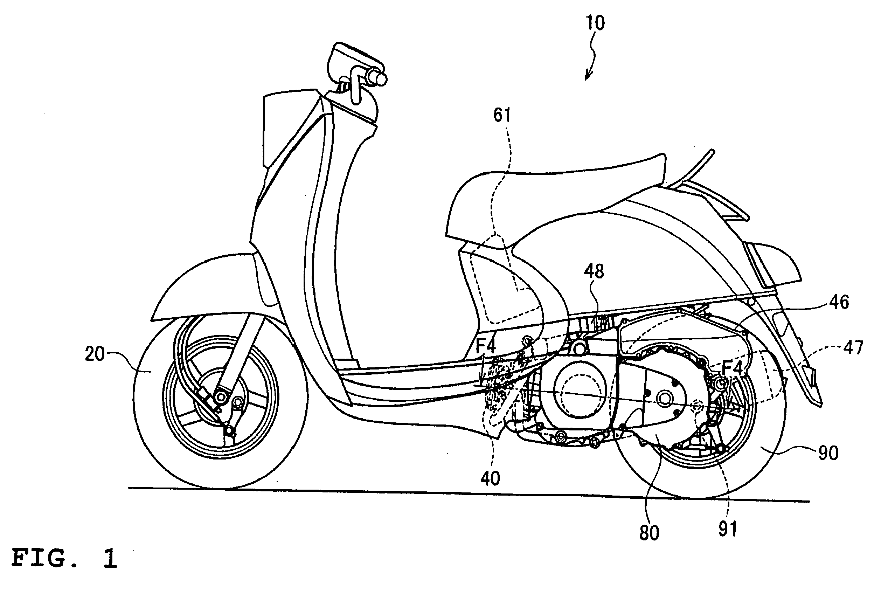

First, general structure of a motorcycle 10, which is a hybrid vehicle according to this embodiment, will be described with reference to FIG. 1.

As shown in FIG. 1, the motorcycle 10 is a straddle type two-wheel vehicle having a front wheel 20 and a rear wheel 90. The motorcycle 10 is so called a hybrid-driven type (more specifically, series-hybrid-driven type) vehicle, in which the rear wheel 90 is rotated by an electric motor unit 80 (an electric motor) disposing forward side of a rear wheel axle 91.

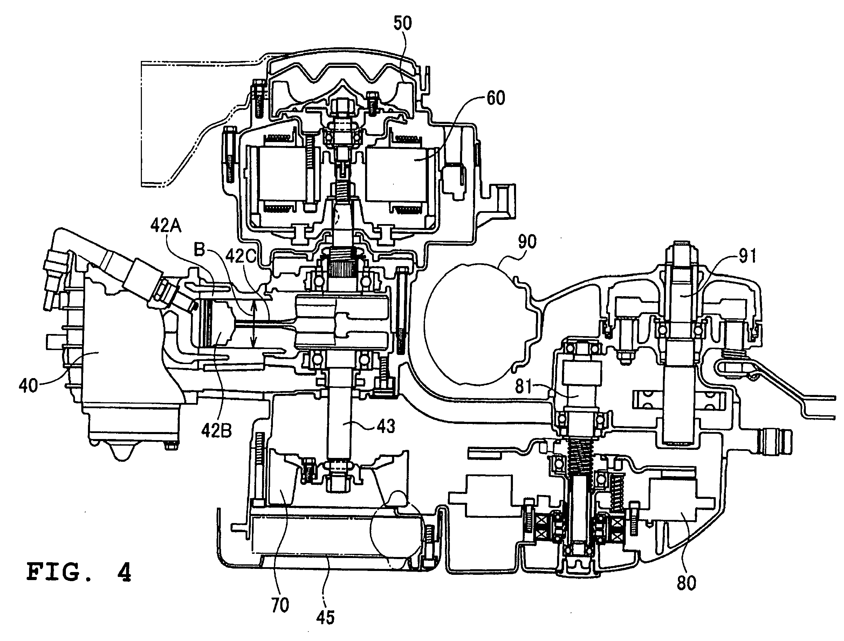

A generator unit 60 (see FIG. 4) is connected to a battery 61 which accumulates electric power to be supplied to the electric motor unit 80 and the like. The generator unit 60 (generator) is rotated by an engine 40, and the generated electric power is accumulated in the battery 61.

In addition, an air cleaner 46 for purifying the air supplied to the engine 40, or to a carburetor 48 to be more precise, as well as a muffler 47 for reducing the exhaust noise from the engine 40 are connected to the engine 40.

### (2) Structure around the engine

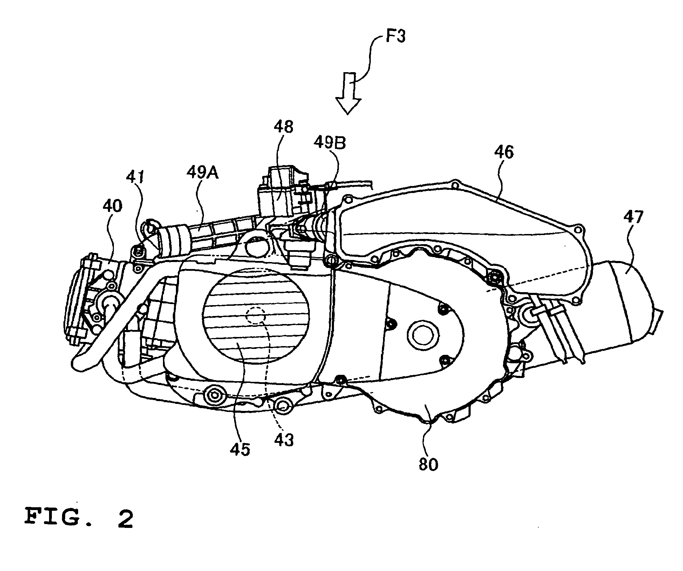

Next, the structure around the engine 40 will be described with reference to FIG. 2 through FIG. 4. FIG. 2 is a left side view including the engine 40, the electric motor unit 80, and other components. As shown in FIG. 2, the air cleaner 46 is disposed above the electric motor unit 80.

The air cleaner 46 is connected to the carburetor 48 via an air-cleaner side intake pipe 49B. The air cleaner 46 has an element (now shown) inside that purifies the air supplied to the carburetor 48 by removing the coarse particulate in the atmospheric air.

The air-cleaner side intake pipe 49B is connected to the air cleaner 46, and has generally cylindrical shape.

The carburetor 48 delivers fuel-air mixture, the fuel mixed with the air introduced from the outside, to the inside of a cylinder 42A (see FIG. 4) via an intake port inlet portion 41. Also, the carburetor 48 is connected to the intake port inlet portion 41 by means of a main intake pipe 49A. According to this embodiment, the carburetor 48 constitutes a fuel-air mixture delivery system.

The main intake pipe 49A is connecting the carburetor 48 to the intake port inlet portion 41, and have generally cylindrical shape.

According to this embodiment, the layout of the carburetor 48, the main intake pipe 49A, and the air-cleaner side intake pipe 49B is arranged to fit into the space formed above a crankshaft 43 of the engine 40.

Also, a radiator unit 45 to carry out cooling by means of the cooling water (LLC) of the engine 40, and the muffler 47 for reducing the exhaust noise from the engine 40 are connected to the engine 40.

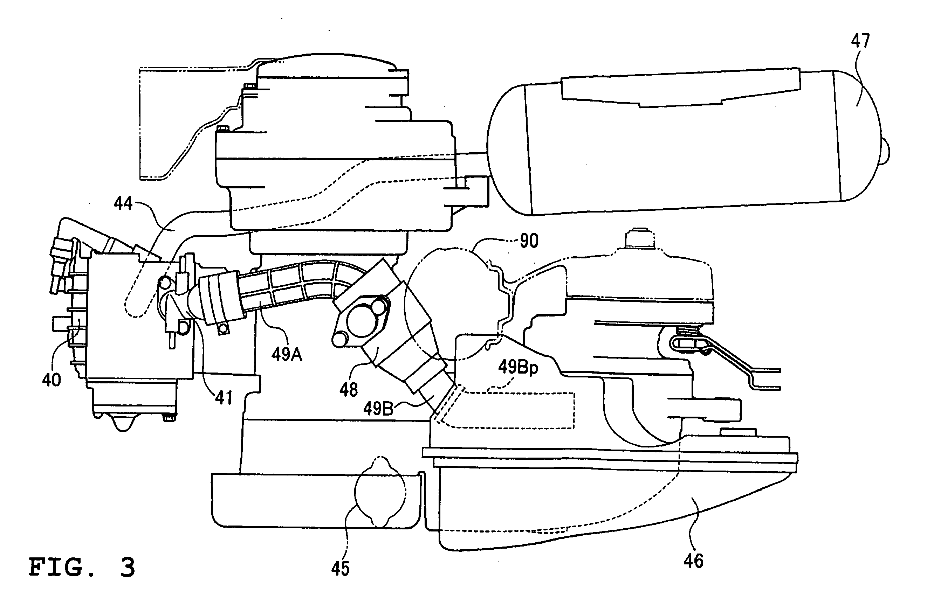

FIG. 3 is a view on arrow F3 shown in FIG. 2. As shown in FIG. 3, the air cleaner 46 is disposed at the left side of the rear wheel 90 in reference to the traveling direction of the motorcycle 10. Further, the main intake pipe 49A and the air-cleaner side intake pipe 49B have arched shape in order to connect the air cleaner 46 disposed at the left side of the rear wheel 90 to the intake port inlet portion 41 disposed generally in the transverse center of the motorcycle 10.

In addition, a protrusion 49Bp projecting into the internal space of the air cleaner 46 is provided at one end of the air-cleaner side intake pipe 49B.

The muffler 47 is disposed at the right side of the rear wheel 90 in reference to the traveling direction of the motorcycle 10. The muffler 47 is connected to an exhaust port (not shown) of the engine 40 via an exhaust pipe 44.

FIG. 4 is a cross-sectional view along the line F4 - F4 in FIG. 1. The engine 40 rotates the generator unit 60 that generates electric power necessary for the electric motor unit 80 to rotate.

The engine 40 is a single-cylinder four-stroke engine, in which a piston 42B provided within a cylinder 42A makes reciprocating movement to rotate a crankshaft 43 connected to it via a connecting rod 42C. The diameter of the bore B is designed at approximately 38mm according to this embodiment.

A generator cooling fan 50 is mounted at one end of the crankshaft 43 that is located in the transversely outer position relative to the generator unit 60. At the same time, a radiator cooling fan 70 to cool down the engine 40 (the radiator unit 45) is mounted at the other end of the crankshaft 43 located in the opposite side of the generator unit 60.

The generator cooling fan 50 and the radiator cooling fan 70 rotate in conjunction with the rotation of the crankshaft 43. The generator cooling fan 50 and the radiator cooling fan 70 provide the cooling function for the generator unit 60 and for the electric motor unit 80, respectively.

The electric motor unit 80 has a rotating shaft 81. The rotating shaft 81 rotates the rear wheel axle 91 via a transmission gear (not shown). As the rear wheel axle 91 is made to rotate by the electric motor unit 80, the rear wheel 90 fixed to the rear wheel axle 91 is also made to rotate.

### (3) Structure of the air cleaner and the intake pipe

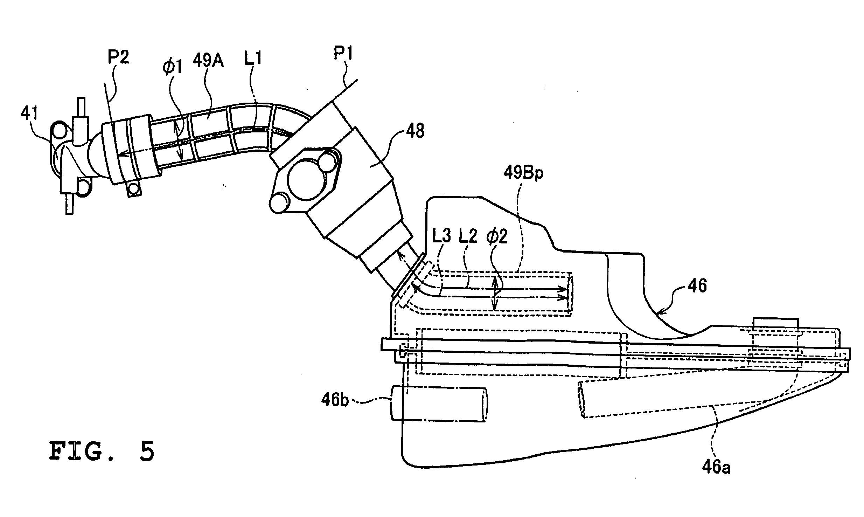

Next, the structure of the air cleaner 46, the main intake pipe 49A, and the air-cleaner side intake pipe 49B will be described more specifically, referring to FIG. 5.

As shown in FIG. 5, according to this embodiment, the centerline length L1 measured from one end of the main intake pipe 49A at the intake port (the carburetor 48) side (position P1 in FIG. 5) to the intake port inlet portion 41 (position P2) is designed to be 3 to 15 times larger than the inside diameter ϕ1 of the main intake pipe 49A.

In addition, as referred to above, a protrusion 49Bp projecting into the internal space of the air cleaner 46 is provided at one end of the air-cleaner side intake pipe 49B. According to this embodiment, the centerline length L2 of the air-cleaner side intake pipe 49B is designed to be 4 to 10 times larger than the inside diameter ϕ2 of the air-cleaner side intake pipe 49B.

Further according to this embodiment, the centerline length L3 of the projection 49Bp is designed to be at least 2 times larger than the inside diameter ϕ2 of the air-cleaner side intake pipe 49B.

The air cleaner 46 has an ambient air intake duct section 46a to take-in the outside air. A part of the ambient air intake duct section 46a is disposed in the inner space of the air cleaner 46. In addition, according to this embodiment, the capacity of the air cleaner 46 is designed to be 30 to 150 times larger than the displacement of the engine 40.

### (4) Structure of the fuel-air mixture delivery system

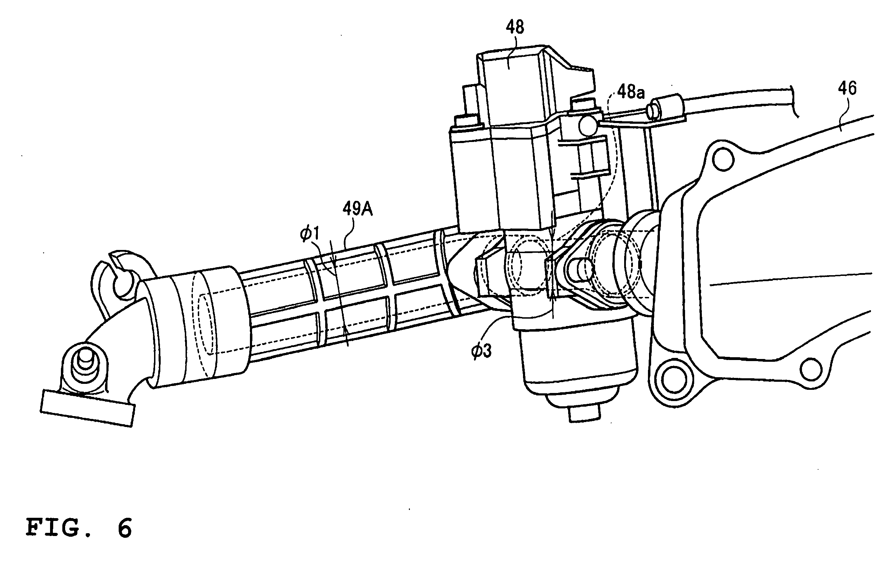

Next, the structure of the carburetor 48 that constitutes the fuel-air mixture delivery system according to this embodiment will be described more specifically, with reference to FIG. 6.

As shown in FIG. 6, the carburetor 48 has a venturi portion 48a (fuel-air mixture passing area) that fuel-air mixture (or air) flows through. The venturi portion 48a is a part with smaller bore diameter (the part of bore diameter ϕ3 as indicated in the Figure) relative to other part of the passage, in order to increase the flow velocity of fuel-air mixture. After passing through the venturi portion 48a, the fuel-air mixture is delivered into the engine 40 (not shown in FIG. 6) by way of the main intake pipe 49A having the inside diameter ϕ1 that is larger than the bore diameter ϕ3 at the venturi portion 48a.

According to this embodiment, the cross-sectional area of the venturi portion 48a, or more specifically, the cross-sectional area of the venturi portion 48a cut along the direction generally orthogonal to the passing flow of the fuel-air mixture (or air), is designed to be 15 to 25 % relative to the cross-sectional area of the bore B (see FIG. 4) of the cylinder 42A.

### (Function, Effectiveness)

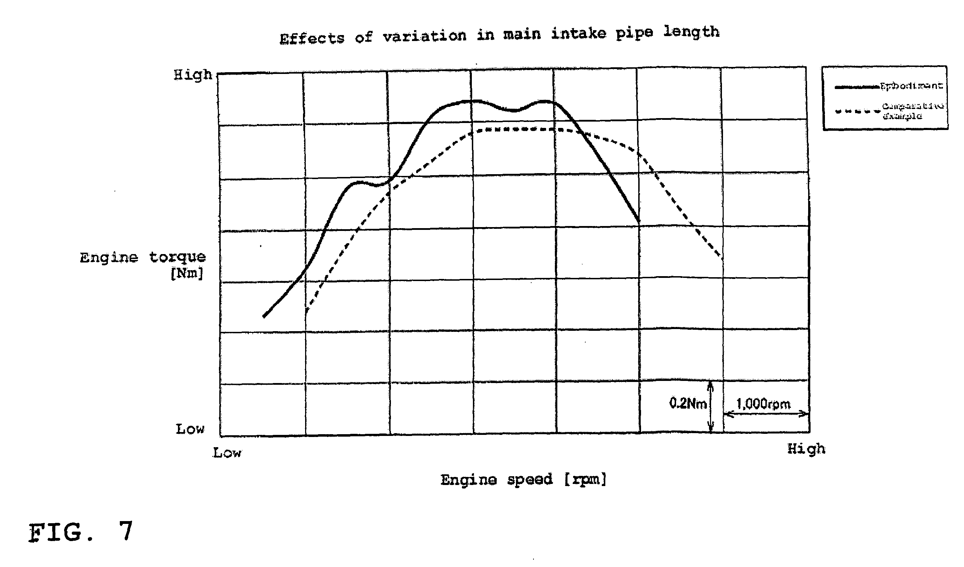

Next, function and effectiveness of the motorcycle 10 according to the aforementioned embodiment will be described referring to the FIG. 7 through FIG. 10.

### (1) Effects of the change in the main intake pipe length

FIG. 7 shows the effects of the change in the centerline length L1 of the main intake pipe 49A on the torque characteristics of the engine 40. The dimensions of the main intake pipe 49A employed in the comparative example and the embodiment illustrated in FIG. 7 are as follows:
Comparative example: Length L1 = 50mm, Inside diameter ϕ1 = 19.5mm
Embodiment: Length L1 = 230mm (+180mm), Inside diameter ϕ1 = 19.5mm

This means that, in the main intake pipe 49A according to the embodiment, the length L1 is designed to be about 11.7 times larger than the inside diameter ϕ1.

As shown in FIG. 7, maximum torque increases on the engine 40 equipped with the main intake pipe 49A according to the embodiment. In addition, the peak point of the torque is shifted into the lower engine speed range.

In other words, as the centerline length L1 of the main intake pipe 49A is designed to fall under the range of 3 to 15 times larger than the inside diameter ϕ1 in the case of engine 40 according to the embodiment, such engine has been turned into a "low engine speed type" that generates high torque at the lower engine speed than the comparative example (conventional hybrid vehicle), without the need for substantial change in the engine components basic layout.

Especially for the hybrid-driven vehicle, such as the motorcycle 10, it is necessary to restrict the upper limit of the speed for the engine 40 to approximately 6,000 engine speed, in order to realize low noise and low vibration that is comparable to those of electric vehicles. Since the peak point of the torque is shifted into the lower engine speed range in the engine 40 according to the embodiment, necessary and sufficient torque to rotate the generator unit 60 is attained while restricting the engine speed upper limit of the engine 40 at 6,000 engine speed or lower.

On the other hand, if the centerline length L1 of the main intake pipe 49A is designed not to fall under the range of 3 to 15 times larger than the inside diameter φ1, it is impracticable to attain necessary and sufficient torque to rotate the generator unit 60, while restricting the speed upper limit of the engine 40 at 6,000 engine speed or lower.

### (2) Effects of the change in the cross-sectional area of venturi portion

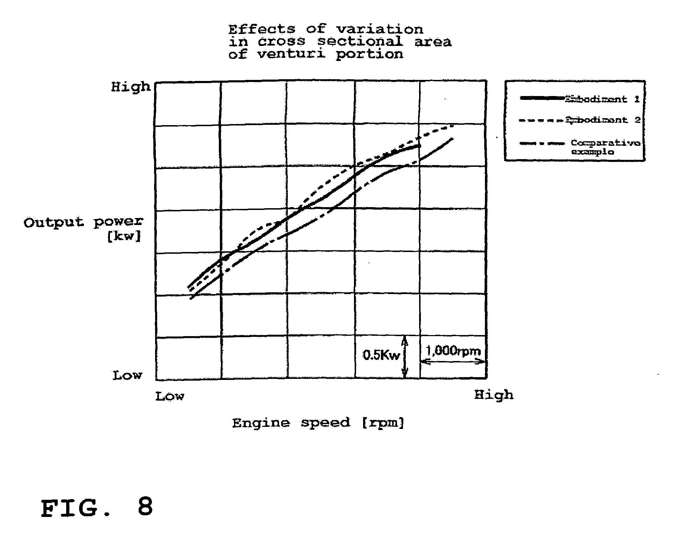

FIG. 8 shows the effect of the change in the cross-sectional area of the venturi portion 48a in the carburetor 48, on the output power characteristics of the engine 40. The dimensions of the main intake pipe 49A employed in the comparative example and the embodiments illustrated in FIG. 8 are as follows:
Comparative example Bore diameter ϕ3 = 18.5mm (area ratio 24%)
Embodiment 1 Bore diameter ϕ3 = 15.0mm (area ratio 16%)
Embodiment 2 Bore diameter ϕ3 = 18.0mm (area ratio 22%)

Note that "area ratio" means the percentage of the cross-sectional area at the venture portion 48a relative to the cross-sectional area of the bore B in the engine 40 (diameter = approximately 38mm).

As shown in FIG. 8, since the cross-sectional area of the venturi portion 48a according to the embodiment 1 and the embodiment 2 is designed to fall under the range of 15 to 25 % of the cross-sectional area of the bore B, the maximum output power of the engine 40 according to the embodiment 1 and the embodiment 2 is higher than that of the comparative example.

On the other hand, if the cross-sectional area of the venturi portion 48a does not fall under the range of 15 to 25 % of the cross-sectional area of the bore B, the maximum output power of the engine 40 cannot be improved as shown in FIG. 8.

### (3) Effects of the changes in the length and inside diameter of the air-cleaner side intake pipe.

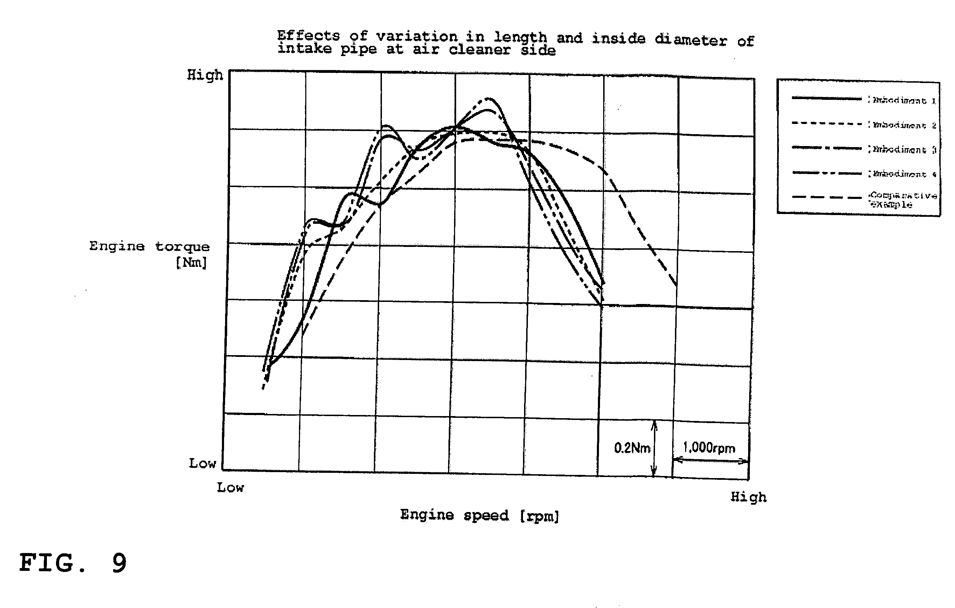

FIG. 9 describes the effect of the change in the centerline length L2 of the air-cleaner side intake pipe 49B, on the torque characteristics of the engine 40. The dimensions of the air-cleaner side intake pipe 49B employed in the comparative example and the embodiments 1 through 4 in FIG. 9 are as follows:
Comparative example:
   Length L2 = 139mm, Inside diameter ϕ2 = 34mm (4.1)
   Protrusion projecting into the internal space of the air cleaner 46: None
Embodiment 1:
   Length L2 = 200mm, Inside diameter ϕ2 = 34mm (5.9)
   Protrusion projecting into the internal space of the air cleaner 46: None
Embodiment 2:
   Length L2 = 60mm, Inside diameter ϕ2 = 34mm
   Length L2 = 140mm, Inside diameter ϕ2 = 28mm (equivalent to 6.7)
   Protrusion projecting into the internal space of the air cleaner 46: None
Embodiment 3:
   Length L2 = 60mm, Inside diameter ϕ2 = 34mm
   Length L2 = 140mm, Inside diameter ϕ2 = 26mm (equivalent to 6.7)
   Protrusion projecting into the internal space of the air cleaner 46: 100mm
Embodiment 4:
   Length L2 = 60mm, Inside diameter ϕ2 = 34mm
   Length L2 = 140mm, Inside diameter ϕ2 = 24mm (equivalent to 6.7)
   Protrusion projecting into the internal space of the air cleaner 46: 160mm

Note that the numerals in the parenthesis represent the proportion of the length L2 against the inside diameter ϕ2 of the air-cleaner side intake pipe 49B.

As shown in FIG. 9, maximum torque increases on the engine 40 equipped with the air-cleaner side intake pipe 49B according to the embodiments 1 through 4. In addition, the peak point of the torque is shifted into lower engine speed range.

In other words, as the centerline length L2 of the air-cleaner side intake pipe 49B is designed to fall under the range of 4 to 10 times larger than the inside diameter φ 2 in the case of engine 40 according to the embodiments 1 though 4, such engine has been turned into a "low engine speed type" that generates high torque at the lower engine speed than the comparative example.

On the other hand, the centerline length L2 of the air-cleaner side intake pipe 49B is designed not to fall under the range of 4 to 10 times larger than the inside diameter φ 2, the engine 40 cannot be turned into a "low engine speed type" that generates high torque at the lower engine speed than the comparative example.

Further, one end of the air-cleaner side intake pipe 49B is projected into the internal space of the air cleaner 46 (in the embodiments 3 and 4). Setting adjustments, such as changing the engine speed at which the maximum torque is generated, can be made easily by varying the relevant projected length.

### (4) Effects of the change in the air cleaner capacity

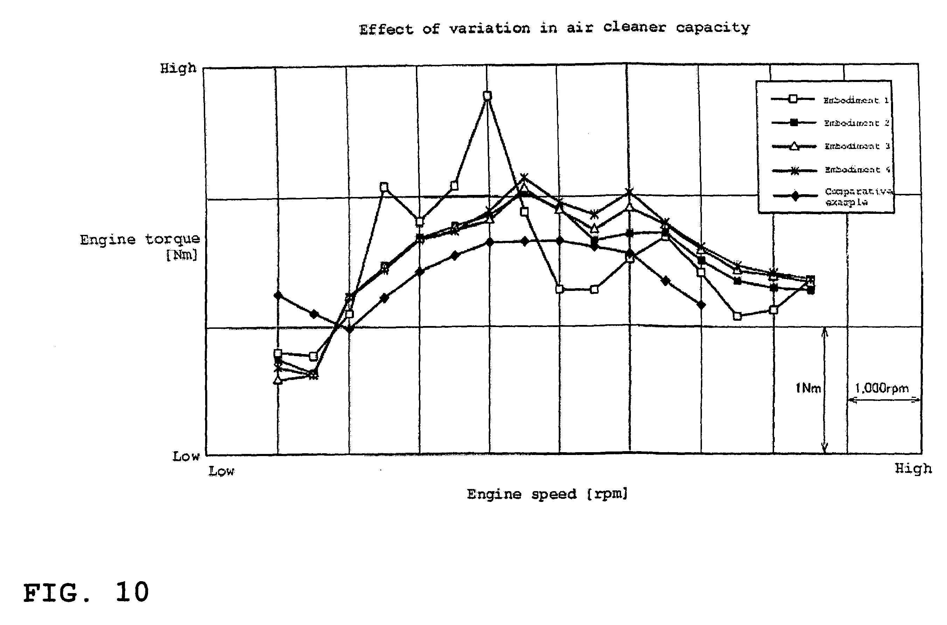

FIG. 10 shows the effect of the change in the capacity of the air cleaner 46 on the torque characteristics of the engine 40. The capacity of the air cleaner 46 employed in the comparative example and the embodiments 1 through 4 in FIG. 10 are as follows:
Comparative example: 1,500cc (30 times)
   Embodiment 1: 7,500cc (150 times)
   Embodiment 2: 1,900cc (38 times)
   Embodiment 3: 3,500cc (70 times)
   Embodiment 4: 6,700cc (134 times)

Note that the numerals in the parenthesis represent the proportion of the capacity of air cleaner 46 against the displacement (50cc) of the engine 40.

As shown in FIG. 10, the engine 40 according to the embodiments 1 through 4 attains higher maximum torque than that of the comparative example, as the capacity of the air cleaner 46 is designed to fall under the range of 30, 38 to 150 times larger than the displacement of the engine 40. In addition, the peak point of the torque is shifted into the lower engine speed range.

On the other hand, if the capacity of the air cleaner 46 does not fall under the range of 30, 38 to 150 times larger than the displacement of the engine 40, the torque characteristics of the engine 40 cannot be altered as shown in FIG. 10.

### (Other embodiments)

In the description so far, the contents of this invention has been disclosed through one of the embodiments according to the invention, but the statement and the drawings constituting a part of the disclosure should not be construed to limit the invention. One of ordinary skill in the art will be able to identify various alternative embodiments based on the disclosure above.

For instance, the air cleaner 46 as described above may be altered as follows:

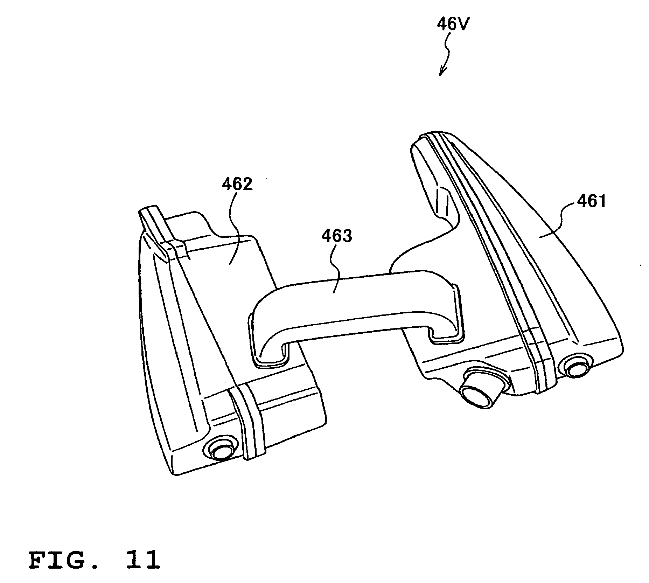

FIG. 11 is a schematic perspective view of an air cleaner 46V according to the alternative embodiment of this invention. The air cleaner 46V may be coupled to the engine 40 in place of the air cleaner 46 described above.

The air cleaner 46V has the first air cleaner 461 and the second air cleaner 462. The first air cleaner 461 and the second air cleaner 462 are communicated by a connecting part 463.

More specifically, the air cleaner 46V is equipped to the motorcycle 10 in the manner that the rear wheel 90 is disposed in the space in between the first air cleaner 461 and the second air cleaner 462 which are communicated by the connecting part 463.

In other words, the first air cleaner 461 is disposed at the right side of the rear wheel 90, and the second air cleaner 462 is disposed at the left side of the rear wheel 90, both in reference to the traveling direction of the motorcycle 10.

By employing the air cleaner 46V, air cleaner having larger capacity (up to 150 times larger) relative to the displacement of the engine 40 can be equipped easily to the motorcycle 10, without making an impact on the external appearance of the motorcycle 10 and the drivability of the motorcycle 10.

Further, according to the embodiment of this invention described above, the ambient air intake duct section 46a is provided as shown in FIG. 5. However, an ambient air intake duct section 46b (shown with long and short dashed line in FIG. 5) may be provided in place of the ambient air intake duct section 46a.

In addition, according to the embodiment of this invention described above, the capacity of the air cleaner 46 is set to be 30 to 150 times larger than the displacement of the engine 40. However, the capacity of the air cleaner 46 is not necessarily in the range of 30 to 150 times larger than the displacement of the engine 40.

In addition, according to the embodiment of this invention described above, a part of the ambient air intake duct section 46a is disposed in the inner space of the air cleaner 46. However, a part of the ambient air intake duct section 46a is not necessarily disposed in the inner space of the air cleaner 46.

Further in addition, according to the embodiment of this invention described above, it is formed in such a way that the centerline length L2 of the air-cleaner side intake pipe 49B falls under the given range (4 to 10 times larger than the inside diameter ϕ2), and that one end of the air-cleaner side intake pipe 49B projects into the inner space of the air cleaner 46. However, the air-cleaner side intake pipe 49B does not always have to be arranged this way.

According to the embodiment of this invention described above, the cross-sectional area of the venture portion 48a is designed to be 15 to 25 % of the cross-sectional area of the bore B. However, the cross-sectional area of the venture portion 48a is not necessarily designed to be 15 to 25 % of the cross-sectional area of the bore B.

Further, according to the embodiment of this invention described above, it is formed to use the carburetor 48 as the fuel-air mixture delivery system. However, a fuel injection system may be used in place of the carburetor 48. In such case, the bore diameter of the position where fuel-air mixture (or air) passes through in the throttle body can be considered as equal to the bore diameter ϕ3 of the venture portion 48a.

In addition, the series-hybrid-driven system is employed in the motorcycle 10 according to the embodiment of this invention described above. However, the invention may be applied to the parallel-hybrid-driven vehicle in which the rear wheel 90 is driven by the engine and the motor (electric motor unit).

In other words, the teaching of this invention may be applied to any hybrid vehicle in which the rear wheel 90 is driven at least either by the engine or by the motor.

The description above discloses (amongst others) a first embodiment of a hybrid vehicle (a motorcycle 10), having: an engine (an engine 40), a motor (an electric motor unit 80); a generator (a generator unit 60) rotated by the engine; and a wheel driven at least either by the engine or by the motor (a rear wheel 90), wherein the engine has a cylinder (a cylinder 42A), an intake port communicating with the cylinder (an intake port inlet portion 41), a fuel-air mixture delivery system (a carburetor 48) for delivering fuel-air mixture, that is the fuel mixed with the air introduced from the outside, to the inside of a cylinder via the intake port, and a main intake pipe (a main intake pipe 49A) having generally cylindrical shape and connecting the fuel-air mixture delivery system to the intake port; and the centerline length (a length L1) measured from the intake port end of the main intake pipe (position P1) to the intake port inlet (position P2) is 3 (three) to 15 (fifteen) times larger than the inside diameter of the main intake pipe (inside diameter ϕ1).

According to such characteristic, since the centerline length of the main intake pipe is designed to be 3 to 15 times larger than the inside diameter, higher torque is generated at lower engine speed than the conventional hybrid vehicle, without the need for substantial change in the engine components basic layout found in the conventional hybrid vehicle.

Especially for the hybrid vehicle, it is necessary to restrict the upper limit of the speed for the internal combustion engine to approximately 6,000 engine speed, in order to realize low noise and low vibration that is comparable to those of electric vehicles. In the hybrid vehicle provided with the characteristics described above, the peak point of the torque is shifted into lower engine speed range in comparison with the traditional hybrid vehicle, and thus, necessary and sufficient torque is generated while restricting the engine speed upper limit of the internal combustion engine at 6,000 engine speed or lower.

In other words, according to the characteristic, a hybrid vehicle that allows reduction of sound level, vibration, and fuel consumption involving the vehicle operation can be provided.

According to a second embodiment, the fuel-air mixture delivery system has a fuel-air mixture passing portion (a venture portion 48a) through which the fuel-air mixture or the air flows, and the cross-sectional area of the fuel-air mixture passing portion, cut along the direction generally orthogonal to the passing flow of the fuel-air mixture or air, is designed to be 15 to 25 % relative to the cross-sectional area of a bore of the cylinder.

According to a third embodiment, the hybrid vehicle further has an air cleaner (an air cleaner 46), and an air-cleaner side intake pipe taking generally cylindrical shape and connected to the air cleaner (an air-cleaner side intake pipe 49B), wherein the centerline length of the air-cleaner side intake pipe (length L2) is 4 to 10 times larger than the inside diameter of the air-cleaner side intake pipe (inside diameter ϕ2).

According to a fourth embodiment, one end of the air-cleaner side intake pipe has a protrusion projecting into the inside space of the air cleaner; and the centerline length of the protrusion (length L3) is twice or more larger than the inside diameter of the air-cleaner side intake pipe.

According to a fifth embodiment, the air cleaner has an ambient air intake duct section (an ambient air intake duct section 46a) and a part of the ambient air intake duct section is disposed in the inner space of the air cleaner.

According to a sixth embodiment, the capacity of the air cleaner is 30 to 150 times larger than the displacement of the engine.

According to the characteristics of the present embodiments, a hybrid vehicle that allows reduction of sound level, vibration, and fuel consumption involving the vehicle operation can be provided.

The description above discloses, as a particularly preferred embodiment, in order to provide a hybrid vehicle that allows reduction of sound level, vibration, and fuel consumption involving the vehicle operation, an engine 40 according to this invention has a carburetor 48 for delivering fuel-air mixture, i.e. the fuel mixed with the air introduced from the outside, to the inside of a cylinder via an intake port inlet portion 41, and a main intake pipe 49A having generally cylindrical shape, and connecting the carburetor 48 and the intake port inlet portion 41, wherein the centerline length measured from the intake port end of the main intake pipe 49A (position P1) to the intake port inlet (position P2) along the centerline of the main intake pipe 49A is in the range of 3 to 15 times larger than the inside diameter ϕ1 of the main intake pipe 49A.

## Claims

1. Engine, in particular for a hybrid vehicle, comprising a fuel-air mixture delivery system (48) delivering fuel-air mixture to a cylinder of the engine and a main intake pipe (49A) connecting the fuel-air mixture delivery system (48) to an intake port inlet portion (41) of the cylinder, wherein a length (L1) along a centerline of the main intake pipe (49A) measured from an intake port end of the main intake pipe (49A) to the intake port inlet portion (41) is in the range of 3 to 15 times larger than an inside diameter (ϕ1) of the main intake pipe (49A).

2. Engine according to claim 1, wherein the main intake pipe has a generally cylindrical shape.

3. Engine according to claim 1 or 2, wherein the fuel-air mixture delivery system has a fuel-air mixture passing portion through which the fuel-air mixture or the air flows, and wherein a cross-sectional area of said fuel-air mixture passing portion, cut along a direction generally orthogonal to the passing flow of the fuel-air mixture or air, is designed to be 15 % to 25 % of a cross-sectional area of a cylinder bore.

4. Engine according to one of the claims 1 to 3, further comprising an air cleaner and an air-cleaner side intake pipe, said air-cleaner side intake pipe having a generally cylindrical shape and being connected to the air cleaner, wherein a centerline length (L2) of the air-cleaner side intake pipe is 4 to 10 times larger than an inside diameter (ϕ2) of the air-cleaner side intake pipe.

5. Engine according to claim 4, wherein one end of the air-cleaner side intake pipe has a protrusion (49Bp) projecting into an inside space of the air cleaner; and wherein a centerline length (L3) of said protrusion (49Bp) is twice or more larger than the inside diameter (ϕ2) of the air-cleaner side intake pipe.

6. Engine according to claim 4 or 5, wherein the air cleaner has an ambient air intake duct section, and wherein a part of said ambient air intake duct section is disposed in the inner space of the air cleaner.

7. Engine according to one of the claims 4 to 6, wherein a capacity of the air cleaner is 30 to 150 times larger than a displacement of the engine.

8. Hybrid vehicle, having an engine, a motor, a generator rotated by the engine, and a wheel driven at least either by the engine or by the motor, wherein the engine comprises a cylinder, an intake port communicating with the cylinder, a fuel-air mixture delivery system for delivering fuel-air mixture, that is the fuel mixed with the air introduced from the outside, to the inside of a cylinder via the intake port, and a main intake pipe having generally cylindrical shape and connecting the fuel-air mixture delivery system to the intake port; and a centerline length (L1) measured from the intake port end of the main intake pipe to the intake port inlet is 3 to 15 times larger than the inside diameter of the main intake pipe.

9. Hybrid vehicle according to claim 8, wherein the fuel-air mixture delivery system has a fuel-air mixture passing portion through which the fuel-air mixture or the air flows, and the cross-sectional area of the fuel-air mixture passing portion, cut along the direction generally orthogonal to the passing flow of the fuel-air mixture or air, is designed to be 15 % to 25 % relative to the cross-sectional area of a cylinder bore.

10. Hybrid vehicle according to claim 8 or 9, further comprising an air cleaner and an air-cleaner side intake pipe taking generally cylindrical shape and connected to the air cleaner, wherein a centerline length (L2) of the air-cleaner side intake pipe is 4 to 10 times larger than the inside diameter of the air-cleaner side intake pipe.

11. Hybrid vehicle according to claim 10, wherein one end of the air-cleaner side intake pipe has a protrusion projecting into the inside space of the air cleaner; and a centerline length (L3) of the protrusion is twice or more larger than the inside diameter of the air-cleaner side intake pipe.

12. Hybrid vehicle according to claim 10 or 11, wherein the air cleaner has an ambient air intake duct section, and a part of the ambient air intake duct section is disposed in the inner space of the air cleaner.

13. Hybrid vehicle according to one of the claims 10 to 12, wherein a capacity of the air cleaner is 30 to 150 times larger than a displacement of the engine.
